## Europäisches Patentamt
## European Patent Office
## Office européen des brevets

(19)

(11) Numéro de publication: **0 309 355**
**A1**

(12) # DEMANDE DE BREVET EUROPEEN

(21) Numéro de dépôt: **88402394.6**

(22) Date de dépôt: **23.09.88**

(51) Int. Cl.⁴: **H 04 M 11/08**

(30) Priorité: **23.09.87 FR 8713140**

(43) Date de publication de la demande:
**29.03.89 Bulletin 89/13**

(84) Etats contractants désignés:
**AT BE CH DE ES GB GR IT LI LU NL SE**

(71) Demandeur: **Auber, Olivier**
**4, Passage Saint Avoye**
**F-75003 Paris (FR)**

**DEFINNOV, Société Anonyme**
**28, Rue de la Redoute**
**F-92260 Fontenay aux Roses (FR)**

(72) Inventeur: **Auber, Olivier**
**4, passage Saint Avoye**
**F-75003 Paris (FR)**

(74) Mandataire: **Joly, Jean-Jacques et al**
**CABINET BEAU DE LOMENIE 55, rue d'Amsterdam**
**F-75008 Paris (FR)**

(54) **Système de communication vidéo interactif.**

(57) Des moyens sont prévus pour mémoriser dans un centre serveur (10) raccordé à un réseau téléphonique (14) des informations graphiques de type vidéotex relatives à au moins une image, et pour modifier les informations graphiques enregistrées en réponse à des commandes transmises à partir de terminaux (18) raccordés au réseau téléphonique et munis d'un écran (18a) sur lequel au moins une partie de l'image peut être affichée. Les informations graphiques mémorisées dans le centre serveur sont converties en signaux vidéo de type télévision de manière à permettre l'affichage sur un ou plusieurs écrans de récepteurs de télévision (34) ou de projecteurs d'images de télévision d'une image dont au moins une partie correspond à celle représentée par les informations graphiques mémorisées à tout instant dans le centre serveur. De la sorte, chaque modification introduite dans les informations graphiques à partir d'un terminal, tel qu'un "Minitel", apparaît immédiatement dans l'image affichée sur l'écran d'un récepteur de télévision.

Fig-1

**EP 0 309 355 A1**

## Description

## Système de communication vidéo interactif

La présente invention concerne un système de communication vidéo, et plus particulièrement un système offrant la possibilité à des téléspectateurs d'intervenir en temps réel dans le contenu d'un programme de télévision en cours de diffusion.

Les sociétés de production et de diffusion de programmes de télévision recherchent souvent une participation des téléspectateurs depuis leurs domiciles, en particulier dans le cas de programmes relatifs à des jeux ou à des débats. Toutefois, les interventions des téléspectateurs, qui se font généralement par téléphone, restent d'une portée limitée et n'influent pas sur le contenue immédiat du programme.

Dans la perspective d'une participation plus active des téléspectateurs et d'une fidélisation de ceux-ci, les sociétés de télévision peuvent trouver intérêt à offrir aux téléspectateurs une possibilité d'action en temps réel sur le programme diffusé, y compris au niveau de l'image.

La présente invention a pour but de proposer un système de communication vidéo interactif offrant une telle possibilité.

Conformément à l'invention, le système proposé comprend :
- un centre serveur raccordé à un réseau téléphonique, des moyens pour mémoriser dans le centre serveur des informations graphiques de type vidéotex relatives à au moins une image, et des terminaux raccordés au réseau téléphonique et munis d'un écran sur lequel au moins une partie de l'image peut être affichée, système caractérisé en ce que :
- le centre serveur comprend des moyens pour modifier les informations graphiques enregistrées, en réponse à des commandes transmises par des utilisateurs à partir de terminaux, et
- des moyens sont reliés au centre serveur pour convertir les informations graphiques mémorisées dans le centre serveur en signaux vidéo de type télévision de manière à permettre l'affichage aux utilisateurs sur un ou plusieurs écrans de récepteurs de télévision ou de projecteurs d'images de télévision, autres que les écrans des terminaux, d'une image dont au moins une partie correspond à celle représentée par les informations graphiques mémorisées à tout instant dans le centre

Avantageusement, les signaux vidéo sont diffusés ou insérés dans des signaux diffusés par un émetteur de télévision pour permettre l'affichage de l'image sur des écrans de récepteurs de télévision.

Ainsi, un téléspectatuer muni d'un terminal d'abonné raccordé au réseau téléphonique a la possibilité d'accéder au centre serveur pour modifier les informations graphiques mémorisées, et la modification apparaît immédiatement dans l'image affichée sur le récepteur de télévision. De plus, lié à des systèmes classiques de messagerie télématique, le système conforme à l'invention permet à tous les participants de communiquer entre eux.

Le système conforme à l'invention est utilisable en liaison avec différents types de programmes de télévision, tels que des jeux ou des émissions débats. En particulier, dans le cas d'émissions débats, les téléspectateurs peuvent exprimer leurs opinions en sélectionnant un élément d'image libre pour lui attribuer une ou plusieurs couleur(s) particulière(s). L'image globale est diffusée soit en permanence en arrière-plan du plateau de télévision, soit par intermittence, soit encore en incrustation, donnant le reflet des opinions des téléspectateurs.

De préférence, les informations graphiques mémorisées dans le centre serveur représentent une image dont le format est multiple de celui d'une image affichée sur un écran d'un terminal d'abonné, et sont converties sous forme de signaux vidéo qui représentent une image de télévision unique, de sorte qu'une image affichée sur un écran de terminal d'abonné représente une partie d'une image affichée sur un écran de récepteur de télévision.

L'écran du terminal d'abonné, dont la définition et la taille peuvent être inférieures à celles de l'écran du récepteur de télévision constitue alors une fenêtre à travers laquelle seule une partie de l'image de télévision est visible. Avantageusement, la position de la fenêtre par rapport à l'image de télévision est ajustable, et des moyens sont prévus pour accéder à tout emplacement d'un élément d'image disponible sur l'écran du terminal d'abonné. Cet accès réalisé, l'utilisateur peut choisir un graphisme particulier et/ou une couleur particulière pour cet élément d'image qui est formé d'un carré élémentaire ou de plusieurs accolés.

En variante, le système conforme à l'invention peut être utilisé localement par exemple dans un lieu public ou dans le cadre d'une exposition. Des terminaux sont disponibles pour les visiteurs tandis que l'image vidéo est transmise à un vidéoprojecteur pour etre affichée sur un grand écran.

L'invention sera mieux comprise à la lecture de la description donnée ci-après en référence aux dessins annexés sur lesquels :
- la figure 1 est une vue générale très schématique d'un mode de réalisation d'un système conforme à l'invention,
- la figure 2 illustre les phases successives de dialogue entre un utilisateur et le centre serveur relié au réseau téléphonique, et
- la figure 3 illustre des possibilités de communication offertes aux participants par la messagerie télématique associée à l'image.

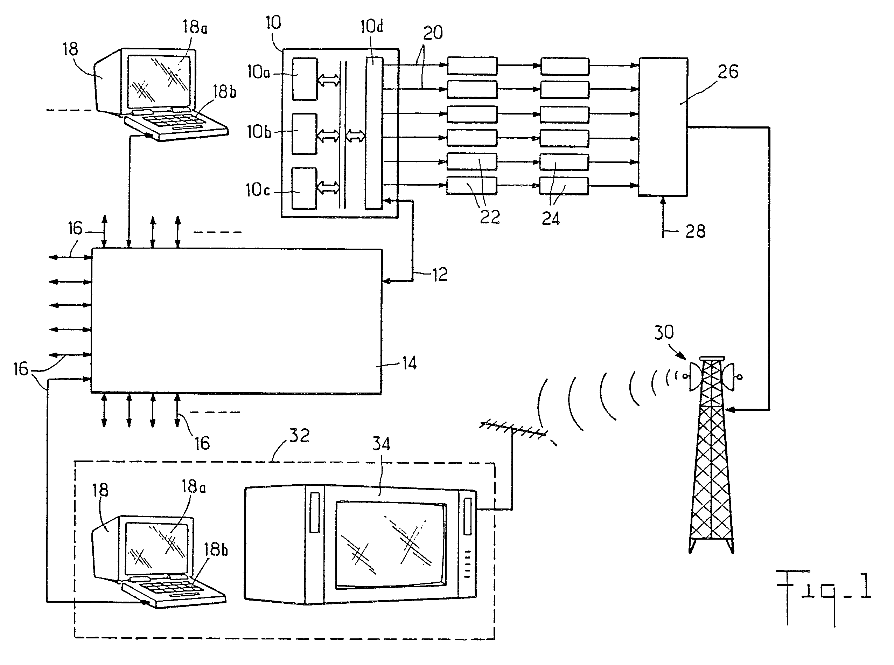

Le système de télécommunication illustré par la figure 1 comprend un centre serveur 10 relié par une liaison 12 à un réseau téléphonique commuté schématisé en 14. A ce réseau sont reliées des lignes d'abonnés 16 dont certaines sont affectées à des terminaux spécialisés 18, tels que des "Minitels" munis d'un écran 18a et d'un clavier 18b pour pouvoir dialoguer avec le centre serveur.

Le centre serveur 10 est, de façon bien connue, un système informatique avec, notamment, une unité de traitement 10a, des mémoires de programmes 10b, des mémoires vives de données 10c et des circuits d'entrées/sorties 10d.

Dans une mémoire vive sont mémorisées des informations graphiques de type vidéotex représentatives d'une image. Cette image globale a un format correspondant à un multiple du format des images formées sur les écrans 18a (multiple égal à six dans l'exemple illustré). En d'autres termes, l'image globale représentée par les informations graphiques constitue une mosaïque de plusieurs sous-images ayant chacune la taille d'une page affichable sur un écran 18a.

Les informations graphiques correspondant à chaque sous-image, et ayant donc le format voulu pour être transmises sur une ligne téléphonique par vidéotex, sont acheminées au moyen de lignes téléphoniques respectives 20 (au nombre de six dans l'exemple illustré) jusqu'à des démodulateurs 22. Les signaux démodulés sont appliqués à des décodeurs 24 qui transforment les signaux reçus de type vidéotex en signaux vidéo de type télévision. Différents types de décodeurs vidéotex/vidéo sont disponibles dans le commerce. Les fonctions de démodulation et codage vidéotex/vidéo peuvent être remplies de manière simple par des terminaux de type "Minitel" équipés d'une sortie spécialisée (prise "Péritel") délivrant directement le signal vidéo.

Les signaux vidéo fournis par les décodeurs 24 sont transmis à une régie 26 qui élabore un signal vidéo analogique représentant l'image globale mémorisée dans le centre serveur. Des régies de télévision sont des appareils bien connus. On pourra utiliser par exemple une régie numérique commercialisée par la société des Etats-Unis d'Amérique "Ampex" sous la référence A.D.O. Cette régie numérique reçoit les signaux vidéo décodés sous forme analogique et élabore un signal analogique qui représente l'image formée par une mosaïque des sous-images transmises par les lignes 20.

Il est impossible de reproduire sur un écran d'un terminal usuel, tel que le Minitel, l'intégralité de l'image de télévision avec la même définition. C'est pourquoi l'image globale représentée par les informations graphiques mémorisées dans le centre serveur a un format multiple de celle visible sur un écran de terminal 18.

Le signal vidéo élaboré par la régie 26 est transmis à un émetteur de télévision 30. Le cas échéant, le signal formé par l'assemblage des sous-images pourra être combiné dans la régie 26 avec au moins un autre signal vidéo transmis par une voie 28 de manière à réaliser par exemple des incrustations ou autres effets spéciaux. Il est également envisageable de projeter l'image globale reconstituée en arrière-plan sur un plateau de télévision pour l'inclure dans les images diffusées.

Le système proposé offre à un téléspectateur installé à son domicile 32 et disposant d'un terminal 18 la possibilité d'agir en temps réel sur l'image diffusée qu'il reçoit sur son récepteur de télévision 34.

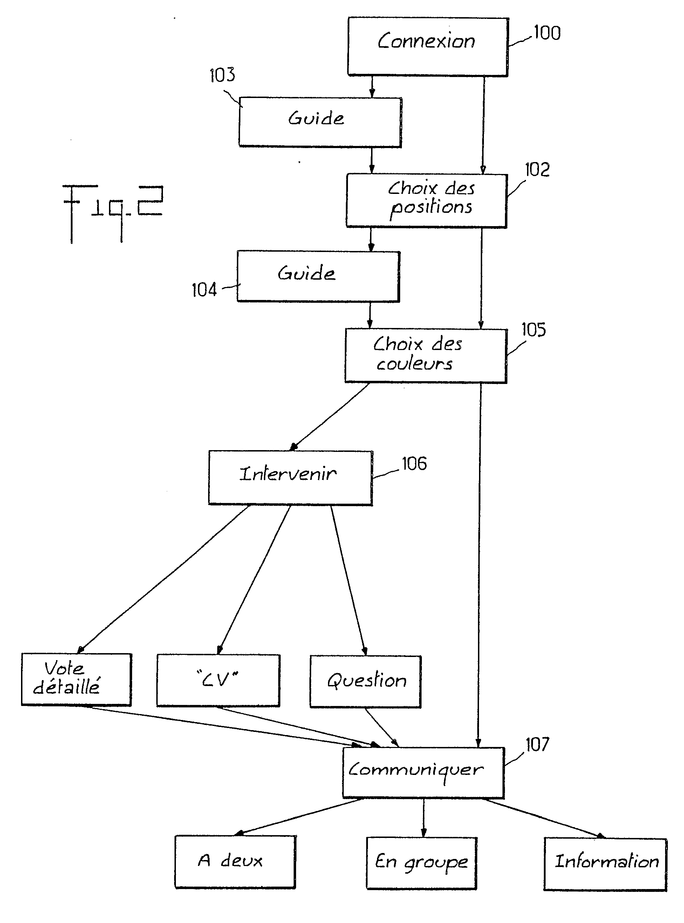

La figure 2 montre les phases successives d'un exemple de dialogue entre un utilisateur et le centre serveur.

Après connexion (phase 100), l'utilisateur choisit une position (phase 102), éventuellement après avoir consulté un guide ou mode d'emploi (phase 101).

Le choix de position consiste, pour l'utilisateur, à sélectionner la partie de l'image globale qu'il souhaite voir apparaître sur l'écran 18a du terminal 18. L'écran 18a constitue alors une fenêtre à travers laquelle l'utilisateur peut visionner toute partie désirée de l'image globale qu'il voit par ailleurs en entier sur l'écran du récepteur de télévision 34. La partie d'image sélectionnable n'est pas limitée à l'une des sous-images transmises par ailleurs sur les lignes 20. A titre indicatif, au départ, peut être affichée sur l'écran 18a une des sous-images constitutive de l'image globale, par exemple celle située en haut et à gauche de celle-ci. L'utilisateur déplace ensuite la fenêtre jusqu'à l'emplacement désiré, c'est-à-dire jusqu'à voir la partie de l'image globale dans laquelle il souhaite intervenir. Le déplacement de proche en proche est commandé par action sur des touches du clavier 18b.

En variante, on pourra associer à l'image globale diffusée des repères de coordonnées verticaux et horizontaux. Le cadrage de l'écran 18a est alors réalisable par choix de coordonnées d'une position dans l'image globale, cette position s'affichant alors au centre de l'écran 18a.

Après le choix de position, la phase suivante consiste pour l'utilisateur dans le choix d'une ou plusieurs couleurs (phase 105), éventuellement après consultation du guide (phase 104). Le choix de couleur(s) permet à l'utilisateur, après sélection d'une position libre dans l'image globale, de s'attribuer cette position en la marquant d'une couleur ou d'une combinaison de couleurs particulière sélectionnée par action sur le clavier 18b. La taille de la position que peut occuper l'utilisateur est d'au moins un et éventuellement plusieurs éléments d'images élémentaires, ou carrés, de l'image au format vidéotex. Si un seul carré est disponible, une seule couleur particulière est programmable. Si plusieurs carrés sont disponibles, plusieurs couleurs sont programmables, et il est possible également de former un graphisme particulier (lettre ou signe).

Dès la validation de choix de couleur(s), la position occupée par l'utilisateur apparaît dans l'image globale sur l'écran du récepteur de télévision.

Le système conforme à l'invention trouve à ce stade une première application comme voie de retour d'une émission débat. Les téléspectateurs occupent les positions libres en exprimant leur vote par une couleur particulière, de sorte que l'image globale progressivement constituée reflète l'opinion de l'audience.

Dans l'exemple envisagé ici, le vote est une parmi plusieurs interventions possibles offertes à l'utilisateur en fonction, par exemple, du type de programme diffusé. Après le choix des couleurs, l'utilisateur peut sélectionner une fonction "intervenir" ou "communiquer".

En mode "intervenir" (phase 106), le choix est offert entre l'opération de vote détaillé décrite ci-dessus, l'envoi d'un curriculum vitae et l'envoi d'une question. Par l'envoi du curriculum vitae, l'utilisateur ayant choisi une position dans l'image communique certaines informations personnelles (nom, adresse, numéro d'appel, ...) qui sont mémorisées en liaison avec les coordonnées de sa position dans l'image. Par l'envoi d'une question, l'utilisateur peut intervenir dans le cadre d'un programme de télévision tel que jeu ou débat.

En mode "communiquer" (phase 107), le choix est offert entre une communication à deux (messagerie classique), une communication en groupe (messagerie classique), ou la prise d'informations telles que, par exemple, le curriculum vitae d'autres utilisateurs, les statistiques des votes détaillés ou encore les questions posées par les autres utilisateurs.

Dans le cas de communication à deux, l'utilisateur peut choisir d'envoyer un message en direct à l'un quelconque des téléspectateurs présents dans l'image en indiquant les coordonnées du correspondant choisi, le message étant affiché sur le terminal de ce dernier.

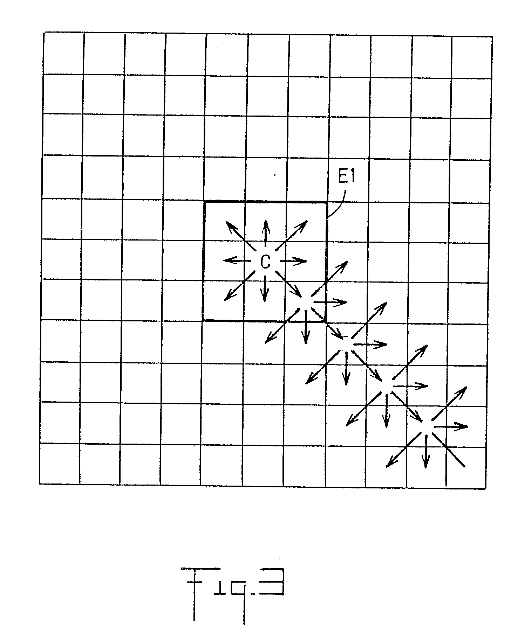

Dans le cas de communication à plusieurs, différentes possibilités peuvent être offertes. L'utilisateur peut par exemple adresser un message sur les terminaux de téléspectateurs proches de lui dans l'image, par exemple ceux situés autour de lui ou ceux situés sur la même ligne ou la même colonne que lui. La figure 3 montre les possibilités de communication à partir d'une position symbolisée par un carré C. Pour un premier étage de communication E1, les personnes informées sont celles occupant les huit positions situées autour du carré C. Pour des étages de communication supérieurs, le nombre de personnes informées croît de proche en proche dans la mesure où les personnes recevant le message acceptent de le retransmettre. En variante, toujours dans le cas de communication à plusieurs, l'utilisateur peut également se voir offrir la possibilité d'adresser un message sur les terminaux de tous les téléspectateurs qui ont fait le même choix graphique que lui pour marquer leurs positions (par exemple même couler, ou même combinaison de couleurs).

Ainsi, le système conforme à l'invention permet d'associer étroitement la messagerie télématique traditionnelle à l'image reçue sur le récepteur de télévision.

Le passage en mode "communiquer" est possible avant ou après exécution de la phase "intervenir". L'exécution des opérations décrites ci-avant est réalisée par mise en oeuvre de programmes informatiques implantés dans le centre serveur 10.

Dans ce qui précède, on a envisagé la diffusion de l'image au moyen d'un émetteur de télévision vers des récepteurs de télévision installés chez des particuliers.

Le système conforme à l'invention peut également être exploité localement dans un lieu public tel qu'une exposition, un salon ou un musée. Des terminaux 18 sont mis à la disposition des visiteurs tandis que l'image globale est transmise, après décodage vidéotex/vidéo et assemblage des sous-images à une installation de vidéoprojection pour être projetée sur un ou plusieurs grands écrans.

Enfin, suivant encore un autre mode de réalisation de l'invention, l'image vidéo pourra être générée en temps réel par une palette graphique à partir des informations graphiques collectées par le centre serveur. Ces informations sous forme numérique sont transmises vers la palette graphique, par exemple au moyen d'une liaison spécialisée afin de générer une image de synthèse de type vidéo. Les palettes graphiques sont des appareils bien connus consistant en des ordinateurs adaptés à la génération d'images de synthèse.

**Revendications**

1. Système de communication vidéo interactif, comprenant un centre serveur (10) raccordé à un réseau téléphonique (14), des moyens pour mémoriser dans le centre serveur (10) des informations graphiques de type vidéotex relatives à au moins une image, et des terminaux (18) raccordés au réseau téléphonique et munis d'un écran (18a) sur lequel au moins une partie de l'image peut être affichée, système caractérisé en ce que :
- le centre serveur (10) comprend des moyens pour modifier les informations graphiques enregistrées, en réponse à des commandes transmises par des utilisateurs à partir de terminaux, et
- des moyens (24) sont reliés au centre serveur (10) pour convertir les informations graphiques mémorisées dans le centre serveur en signaux vidéo de type télévision de manière à permettre l'affichage aux utilisateurs sur un ou plusieurs écrans de récepteurs de télévision (34) ou de projecteurs d'images de télévision, autres que les écrans (18a) des terminaux (18), d'une image dont au moins une partie correspond à celle représentée par les informations graphiques mémorisées à tout instant dans le centre serveur.

2. Système selon la revendication 1, caractérisé en ce que les signaux vidéo sont diffusés ou insérés dans des signaux diffusés par un émetteur de télévision (30).

3. Système selon la revendication 1, caractérisé en ce que les signaux vidéo sont tranmis à un appareil de projection d'images de télévision.

4. Système selon l'une quelconque des revendications 1 à 3, caractérisé en ce que les informations graphiques mémorisées dans le centre serveur (10) représentent une image dont le format est multiple de celui d'une image affichée sur un écran d'un terminal (18) et sont converties sous forme de signaux vidéo qui représentent une image de télévision.

5. Système selon la revendication 4, caractérisé en ce que l'écran (18a) d'un terminal constitue une fenêtre à travers laquelle seule une partie de l'image de télévision représentée par les signaux vidéo est visible, et en ce que des moyens sont prévus pour ajuster la position

EP 0 309 355 A1

de la fenêtre par rapport à l'image de télévision.

6. Système selon la revendication 5, caractérisé en ce que des moyens sont prévus pour accéder à tout emplacement d'un élément d'image disponible sur l'écran d'un terminal (18) et pour commander à partir du terminal l'affichage d'une couleur particulière et/ou d'un graphisme particulier à l'emplacement choisi, de sorte que tout emplacement occupé dans l'image correspond à un emplacement particulier.

7. Système selon la revendication 6, caractérisé en ce qu'il comprend des moyens permettant, à partir d'un terminal (18), l'envoi de message sur au moins un autre terminal (18) auquel correspond un emplacement sélectionné dans l'image.

Fig-1

Fig.2

Connexion — 100

103 — Guide

Choix des positions — 102

Guide — 104

Choix des couleurs — 105

Intervenir — 106

Vote détaillé   "CV"   Question

Communiquer — 107

A deux   En groupe   Information

Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 616 263  (EICHELBERGER)<br>* En entier *<br>--- | 1-3,6,7 | H 04 M  11/08 |
| Y | REVIEW OF THE ELECTRICAL COMMUNICATION LABORATORIES, vol. 33, no. 2, mars 1985, pages 277-283, Tokyo, JP; Y. KOBAYASHI et al.: "Videotex terminals for the INS model system"<br>* Page 277, colonne de gauche, ligne 1 - page 279, colonne de droite, ligne 7; page 280, colonne de droite, ligne 9 - page 283, colonne de gauche, ligne 5; figures 2-4,8 *<br>--- | 1-3,6,7 | |
| A | EP-A-0 230 241  (SONY CORP.)<br>* Colonne 4, ligne 39 - colonne 7, ligne 47; figures 1-3 *<br>--- | 1,4,5 | |
| A | EP-A-0 222 920  (KABUSHIKI KAISHA AI ESU ESU)<br>* Page 2, ligne 15 - page 7, ligne 6; figures 1-7 *<br>--- | 1,4,5 | DOMAINES TECHNIQUES RECHERCHES (Int. Cl.4) |
| A | DE-A-3 418 995  (TV SYSTEM ELECTRONIC GmbH)<br>* Page 9, ligne 4 - page 14, ligne 12; figures 1-5 *<br>--- | 1,4,5 | H 04 M<br>H 04 N<br>H 04 H |
| A | TELCOM REPORT, vol. 8, no. 5, septembre-octobre 1985, pages 350-352, Berlin, DE; P. KOCH et al.: "Bildschirmtext-Terminals mit mehr "Intelligenz""<br>* Pages 351-352 *<br>----- | 1,6,7 | |

Le présent rapport a été établi pour toutes les revendications

| Lieu de la recherche | Date d'achèvement de la recherche | Examinateur |
|---|---|---|
| LA HAYE | 16-12-1988 | DELANGUE P.C.J.G. |